# EUROPEAN PATENT SPECIFICATION

(11) **EP 2 703 615 B1**
(45) Date of publication and mention of the grant of the patent: **25.03.2015**
(21) Application number: 12199729.0
(22) Date of filing: 28.12.2012
(51) Int. Cl.: F01N 13/18, F01N 13/00, F01N 3/10, F16L 9/00

(54) **Exhaust system comprising a turbocharger, catalytic converter and a connection pipe**
Abgassystem mit einem Turbolader, einem Abgaskatalysator und einem Verbindungsstück
Système d'échappement comprenant un turbocompresseur, un convertisseur catalytique et un connecteur

(30) Priority: 28.08.2012 KR 20120094402
(43) Date of publication of application: 05.03.2014
(73) Proprietor: Hyundai Motor Company, Seoul (KR); KIA Motors Corporation, Seoul (KR)
(72) Inventor: Jang, Chunsoon, Hwaseong-si (KR)
(74) Representative: Viering, Jentschura & Partner Patent- und Rechtsanwälte

(56) References cited:
- CN-A- 102 588 051
- CN-U- 202 023 612
- CN-U- 202 300 606
- DE-A1-102010 032 319

## Description

### BACKGROUND OF THE INVENTION

### (a) Field of the Invention

The present invention relates to an exhaust system having a cone shape connection pipe that connects a warm up catalytic converter with a turbocharger disposed on an exhaust line configured to exhaust gas of an engine to the exterior of the vehicle.

### (b) Description of the Related Art

Generally, a flange and a cone shape connection pipe are disposed between a turbocharger and a warm up catalytic converter. Further, an interior side of the flange and the connection pipe is welded together and thus the number of welding portions is increased inside the exhaust line.

In addition, the cone shape connection pipe is made of casting material and thus the overall weight of the exhaust system is increased. Furthermore, material characteristics of the welding portions are transformed by high temperature exhaust gas causing leak of exhaust gas or decrease the durability of the welding portions.

Particularly, in an engine having a turbocharger, due to the vibration and the temperature change rate being larger than that of a MPI (multi point injection) engine or a GDI (gasoline direct injection) engine, the structure of the connection pipe connecting the turbocharger with a warm up catalytic converter must be improved. Document DE 10 2010 032 319 shows a flange connection of a turbocharger having a clamping bracket that engages with flanges. Document CN 102588051 shows a waste gas post-processing system of a twin-turbo supercharged engine having a first and a second gas exhaust manifold. Document CN 202023612 shows a structure for improving the durability of an exhaust heat end of a turbo supercharged engine having a catalytic converter which comprises a shell, a carrier arranged in the shell, and a liner arranged between the shell and the carrier. Document CN 202300606 shows an engine hot end assembly having an engine exhaust manifold and a catalyst, wherein a turbocharger is connected between the engine exhaust manifold and the catalyst. The above information disclosed in this section is only for enhancement of understanding of the background of the invention and therefore it may contain information that does not form the prior art that is already known in this country to a person of ordinary skill in the art.

### SUMMARY OF THE INVENTION

The present invention provides an exhaust system having advantages of preventing leak of the exhaust gas, improving the durability of the exhaust system, and reducing the weight of a connection pipe by minimizing the change of the material characteristics in a welding portion.

An exhaust system according to an exemplary embodiment of the present invention includes a turbocharger operated by exhaust gas, a catalytic converter disposed at a downstream side of the turbo charger, and a connection pipe in which an inlet portion and an outlet portion are formed at both end portions of the connection pipe to transfer the exhaust gas of the turbocharger to the catalytic converter, wherein the connection pipe may include a first member on which the inlet portion is formed at one end portion thereof and a first outlet portion is formed at the other end portion thereof to form a part of the outlet portion, and a second member joined to the first member to form an entire outlet portion together with the first outlet portion.

The first outlet portion of the first member and the second outlet portion of the second member may be joined to form an outlet portion of a closed curve line shape. The inlet portion of the first member may have a circle shape, the first outlet portion of the first member and the second outlet portion of the second member may have corresponding semi-circle shapes, and the outlet portions may be joined to form a circular outlet portion. A sensor aperture may be formed on the second member to connect the interior of the connection pipe with the exterior of the connection pipe.

The exhaust system may further include a flange joined to the inlet portion of the first member and may be in connection with the outlet of the turbocharger and welded with the first member along the exterior circumference of the first member to form an exterior surface welding portion. The flange may be made of SUS (e.g., a grade of steel) casting steel that the same of the outlet portion of the turbo charger. The first member and the second member may be formed by pressing SUS material and they may be joined to form the connection pipe.

An exhaust system according to an exemplary embodiment of the present invention includes a turbocharger operated by exhaust gas, a catalytic converter disposed at a downstream side of the turbocharger, and a connection pipe on which an inlet portion and an outlet portion are formed at both end portions of the connection pipe to transfer the exhaust gas of the turbocharger to the catalytic converter, wherein the inlet portion has a closed curve shape to receive the exhaust gas from the turbocharger and the outlet portion of the connection portion may include a first element that forms a part of the outlet portion and a first incision portion formed from the first outlet portion toward the inlet portion to connect the interior of the connection pipe to the exterior of the connection, and a second element including a second incision portion corresponding to the first incision portion of the first member, wherein the first member and the second member may join to from an outlet portion of a closed curve line shape. Furthermore, the first and the second incision portions may be formed from a point where the first outlet portion is joined to the second outlet portion toward the inlet portion.

As described above, in an exhaust system according to an exemplary embodiment of the present invention, a connection pipe connecting a turbocharger with a warm-up catalytic converter may be formed by SUS material through a pressing process to reduce the weight and cost of the system, compared to a system in which a connecting pipe is formed by a casting material. In addition, a SUS cast steel flange having similar material to that of the outlet of the turbocharger may be used to reduce overall heat transformation and prevent leak of the exhaust gas.

Furthermore, the inlet portion of the connection pipe may be integrally formed and the exterior surface thereof may be welded to the flange, and thus the gap between the inlet portion and the flange may be eliminated. Moreover the exhaust gas passage does not include a welding portion, the leak of the exhaust gas may be prevented, and the durability of the system may be increased.

### BRIEF DESCRIPTION OF THE DRAWINGS

FIG. 1 is an exemplary view of an exhaust system according to an exemplary embodiment of the present invention.
FIG. 2 is an exemplary view of a connection pipe applied to an exhaust system according to an exemplary embodiment of the present invention.
FIG. 3 is an exemplary side view of a connection pipe applied to an exhaust system according to an exemplary embodiment of the present invention.
FIG. 4 is an exemplary enlarged side view of a connection pipe applied to an exhaust system according to an exemplary embodiment of the present invention.
FIG. 5 an exemplary schematic showing an inlet portion and an outlet portion of a connection pipe applied to an exhaust system according to an exemplary embodiment of the present invention.

### DESCRIPTION OF EXEMPLARY EMBODIMENTS

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, combustion, plug-in hybrid electric vehicles, hydrogen-powered vehicles and other alternative fuel vehicles (e.g. fuels derived from resources other than petroleum).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

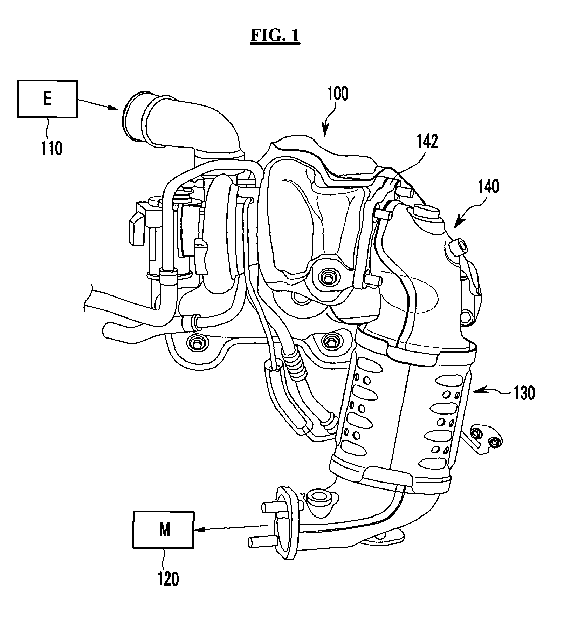

An exemplary embodiment of the present invention will hereinafter be described in detail with reference to the accompanying drawings. FIG. 1 is an exemplary view of an exhaust system according to an exemplary embodiment of the present invention.

Referring to FIG. 1, an exhaust system may include an engine 110, a turbocharger 100, a flange 142, a connection pipe 140, a warm-up catalytic converter 130, and muffler 120.

The exhaust gas of the engine 110 may be supplied to the turbocharger 100 through an exhaust manifold, and the exhaust gas of the turbocharger 100 may be supplied to the warm-up catalytic converter 130 through the connection pipe 140. The exhaust gas of the warm-up catalytic converter 130 may be released to the exterior of the system through the muffler 120. The function of the warm-up catalytic converter 130 is known in the conventional art, and thus the detailed description thereof will be omitted.

The turbocharger 100 and the connection pipe 140 may be connected by the flange 142 which may be welded along an exterior circumference of the connection pipe 140. Accordingly, the heat transformation of the exhaust passage and the exhaust gas leak may be prevented, and the durability thereof may be improved. The flange 142 may be made of SUS casting material similar to that of the outlet portion of the turbocharger 100, and allowing, overall uniform heat transformation to reduce exhaust gas leak. The connection pipe 140 may be formed by joining the first member 200 and the second member 210 that may be formed by a pressing process and the weight thereof may be reduced.

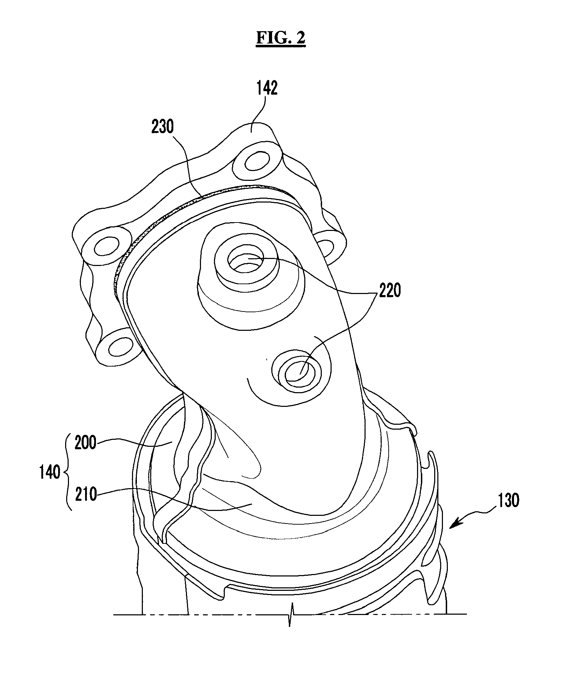

Referring to FIG. 2, FIG. 3, and FIG. 4, the connection pipe 140 will be described in detail.

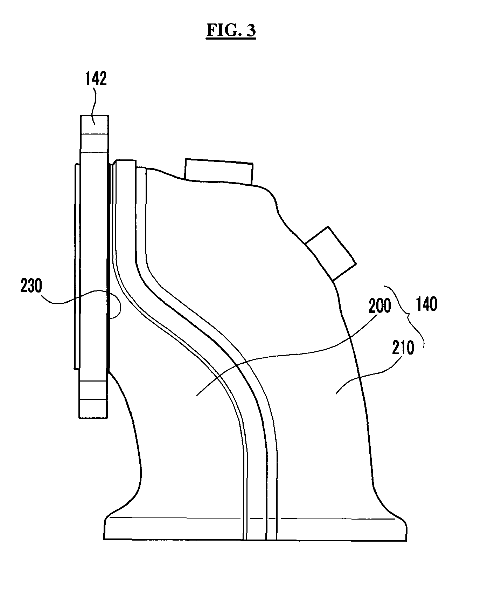

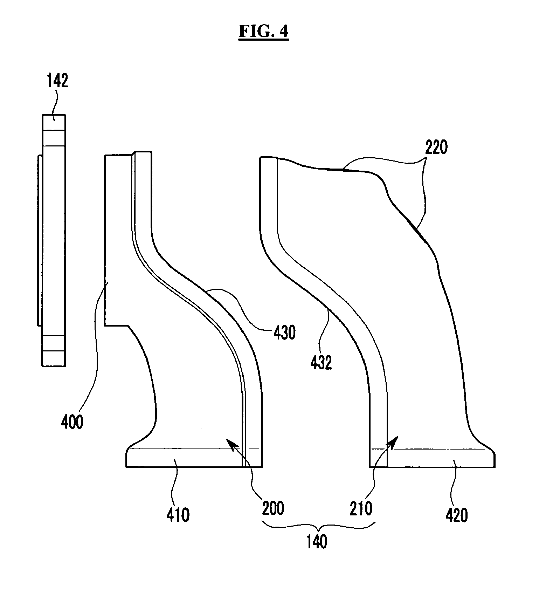

FIG. 2 is an exemplary view of a connection pipe applied to an exhaust system according to an exemplary embodiment of the present invention, FIG. 3 is an exemplary side view of a connection pipe applied to an exhaust system according to an exemplary embodiment of the present invention, and FIG. 4 is an exemplary enlarged side view of a connection pipe applied to an exhaust system according to an exemplary embodiment of the present invention.

Referring to FIG. 2 and FIG. 3, the connection pipe 140 includes a first member 200 and a second member 210, the first member 200 and the second member 210 are joined with each other to the connection pipe 140 of a cone shape. The length of an interior diameter of the inlet portion 400 connected to the turbocharger 100 on the connection pipe 140 may be shorter than the length of an interior diameter of the outlet portion 440 connected to the warm-up catalytic converter 130.

Two sensor apertures 220 may be formed on the second member 210 and a sensor (not shown) may be inserted through the sensor aperture 220 to detect the characteristics of the exhaust gas. The number of the sensor aperture may be varied.

Further, the flange 142 may be welded to the inlet portion of the connection pipe 140, and an exterior surface welding portion 230 may be formed along an exterior circumference of the connection pipe 140 to connect the connection pipe 140 to the flange 142.

Referring to FIG. 4, an inlet portion 400 may be formed at one side of the first member 200 of the connection pipe 140. The exterior surface of the inlet portion 400 may be welded on the flange 142 to form the exterior surface welding portion 230. The inlet portion 400 may be formed at one end portion of the first member 200 and a first outlet portion 410 may be formed at the other end portion. The first outlet portion 410 may be connected to a part of an inlet portion of the warm-up catalytic converter 130.

A first incision portion 430 may be formed on the first member 200 (or element) and the first incision portion 430 may be from the outlet portion 440 toward the inlet portion 400. A corresponding second incision portion 432 may be formed on the second member 210 (or element) to correspond to the shape of the first incision portion 430. Furthermore, the first incision portion 430 may be joined with the corresponding second incision portion 432 to complete the connection pipe 140.

In addition, the second outlet portion 420 may be formed to correspond to the first outlet portion 410. The second outlet portion 420 may be joined to the other end of the inlet of the warm-up catalytic converter 130. In other words, the first outlet portion 410 and the second outlet portion 420 may form one outlet portion 440.

In an exemplary embodiment of the present invention, the connection pipe 140 may be bent in a predetermined angle and the inlet portion 400 may be disposed in a vertical direction to the outlet portion 440.

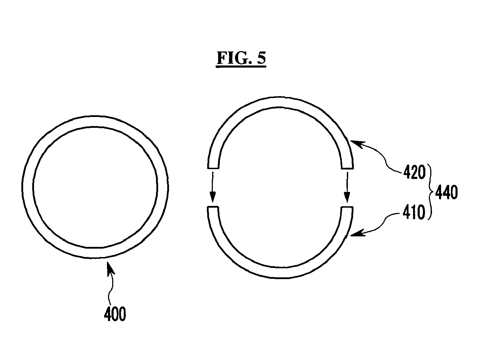

FIG. 5 an exemplary schematic showing an inlet portion and an outlet portion of a connection pipe applied to an exhaust system according to an exemplary embodiment of the present invention.

Referring to FIG. 5, the inlet portion 400 of the first member 200 may be formed along a closed curve line of a circle shape. In an exemplary embodiment of the present invention, the inlet portion 400 may be formed along various types of closed curve lines, and is not limited to the circle shape. An exhaust gas passage may be formed at a central portion of the inlet portion 400.

In addition, the first outlet portion 410 of the first member 200 may be formed along a semi-circle line and the second outlet portion 420 of the second member 210 may be formed along a semi-circle line that is symmetrical to the first outlet portion 410.

In an exemplary embodiment of the present invention, the first outlet portion 410 and the second outlet portion 420 may be formed along curved lines that are symmetrical with each other, but the system is not limited thereto. Accordingly, the first and second outlet portion 440 may be formed along any other closed curve line.

While this invention has been described in connection with what is presently considered to be exemplary embodiments, it is to be understood that the invention is not limited to the disclosed embodiments, but, on the contrary, is intended to cover various modifications and equivalent arrangements included within the scope of the accompanying claims.

**<Description of symbols>**

| | | | |
|---|---|---|---|
| 100: | turbo charger | 110: | engine |
| 120: | muffler | 130: | warm-up catalytic converter |
| 140: | connection pipe | 142: | flange |
| 200: | the first member | 210: | the second member |
| 220: | sensor aperture | 230: | exterior surface welding portion |
| 400: | inlet portion | 410: | the first outlet portion |
| 420: | the second outlet portion | 430: | incision portion |
| 432: | corresponding incision portion | 440: | outlet portion |

## Claims

1. An exhaust system, comprising:
a turbocharger (100) operated by exhaust gas;
a catalytic converter (130) disposed at a downstream side of the turbo charger; and
a connection pipe (140) having an inlet portion (400) and an outlet portion (440) formed at both end portions of the connection pipe to transfer the exhaust gas of the turbocharger to the catalytic converter,
**characterized in that** the connection pipe includes:
a first member (200) on which the inlet portion is formed at one end portion of the first member and a first outlet portion (410) is formed at the other end portion of the first member to form a part of the outlet portion; and
a second member (210) joined to the first member to form an entire outlet portion with the first outlet portion.

2. The exhaust system of claim 1, wherein the first outlet portion (410) of the first member (200) and the second outlet portion (420) of the second member (210) are joined to form an outlet portion (440) having a closed curve line shape.

3. The exhaust system of claim 2, wherein the inlet portion (400) of the first member (200) has a circle shape and the first outlet portion (410) of the first member and the second outlet portion (420) of the second member (210) have a semi-circle shape corresponding with each other to form a circular outlet portion (440).

4. The exhaust system of claim 1, wherein a sensor aperture (220) is formed on the second member (210) to connect an interior of the connection pipe (140) to an exterior of the connection pipe.

5. The exhaust system of claim 1, further comprising:
a flange (142) joined to the inlet portion (400) of the first member (200) and is in connection with the outlet of the turbocharger (100) welded to the first member along an exterior circumference of the first member to form an exterior surface welding portion (230).

6. The exhaust system of claim 5, wherein the flange (142) and the outlet portion of the turbocharger are made of casting steel.

7. The exhaust system of claim 5, wherein the first member (200) and the second member (210) are formed by pressing material and are joined to form the connection pipe (140).

8. An exhaust system, comprising:
a turbocharger (100) operated by exhaust gas;
a catalytic converter (130) disposed at a downstream side of the turbo charger; and
a connection pipe (140) on which an inlet portion (400) and an outlet portion (440) are formed at both end portions of the connection pipe to transfer the exhaust gas of the turbocharger to the catalytic converter, wherein the inlet portion has a closed curve shape to receive the exhaust gas from the turbocharger,
**characterized in that** the outlet portion of the connection portion includes:
a first element (200) that forms a first part of the outlet portion and includes a first incision portion (430) formed along the first outlet portion toward the inlet portion to connect an interior of the connection pipe to an exterior of the connection pipe; and
a second element (210) that forms a second part of the outlet portion and includes a corresponding second incision portion (432) corresponding to the first incision portion of the first element, wherein the first element and the second element join to form an outlet portion of a closed curve line shape.

9. The exhaust system of claim 8, wherein the first (430) and the corresponding second incision portions (432) are formed from a point where the first element (200) is joined to the second element (210) toward the inlet portion.

## Patentansprüche

1. Ein Abgassystem, aufweisend:
einen Turbolader (100), der mittels eines Abgases angetrieben wird,
einen Katalysator (130), der stromabwärts des Turboladers angeordnet ist, und
ein Verbindungsrohr (140), das einen Einlassabschnitt (400) und einen Auslassabschnitt (440) hat, welche an beiden Endabschnitten des Verbindungsrohres ausgebildet sind, um das Abgas des Turboladers zum Katalysator weiterzuleiten,
**dadurch gekennzeichnet, dass** das Verbindungsrohr aufweist:
ein erstes Element (200), an dem an einem Endabschnitt des ersten Elementes der Einlassabschnitt ausgebildet ist und an dem am anderen Endabschnitt des ersten Elementes ein erster Auslassabschnitt (410) ausgebildet ist, um einen Teil des Auslassabschnittes zu bilden, und
ein zweites Element (210), das an das erste Element angefügt ist, um mit dem ersten Auslassabschnitt einen gesamten Auslassabschnitt zu bilden.

2. Das Abgassystem nach Anspruch 1, wobei der erste Auslassabschnitt (410) des ersten Elementes (200) und der zweite Auslassabschnitt (420) des zweiten Elementes (210) aneinander gefügt sind, um einen Auslassabschnitt (440) zu bilden, der eine geschlossene Kurvenlinien-Form hat.

3. Das Abgassystem nach Anspruch 2, wobei der Einlassabschnitt (400) des ersten Elementes (200) eine Kreisform hat und der erste Auslassabschnitt (410) des ersten Elementes und der zweite Auslassabschnitt (420) des zweiten Elementes (210) eine zueinander korrespondierende Halbkreisform haben, um einen kreisförmigen Auslassabschnitt (440) zu bilden.

4. Das Abgassystem nach Anspruch 1, wobei eine Sensor-Öffnung (220) am zweiten Element (210) ausgebildet ist, um einen Innenraum des Verbindungsrohres (140) mit einem Außenraum des Verbindungsrohres zu verbinden.

5. Das Abgassystem nach Anspruch 1, ferner aufweisend:
einen Flansch (142), der an dem Einlassabschnitt (400) des ersten Elementes (200) angefügt ist und mit dem Auslass des Turboladers (100) in Verbindung steht, an das erste Element entlang eines Außenumfangs des ersten Elementes geschweißt ist, um einen Außenfläche-Schweißabschnitt (230) zu bilden.

6. Das Abgassystem nach Anspruch 5, wobei der Flansch (142) und der Auslassabschnitt des Turboladers aus Gussstahl hergestellt sind.

7. Das Abgassystem nach Anspruch 5, wobei das erste Element (200) und das zweite Element (210) durch Pressen von Material gebildet sind und aneinander gefügt sind, um das Verbindungsrohr (140) zu bilden.

8. Ein Abgassystem, aufweisend.
einen Turbolader (100), der mittels eines Abgases angetrieben wird,
einen Katalysator (130), der stromabwärts des Turboladers angeordnet ist, und ein Verbindungsrohr (140), an dem an beiden Endabschnitten des Verbindungsrohres ein Einlassabschnitt (400) und ein Auslassabschnitt (440) ausgebildet sind, um das Abgas des Turboladers zum Katalysator weiterzuleiten, wobei der Einlassabschnitt eine geschlossene Kurvenlinien-Form hat, um das Abgas vom Turbolader zu erhalten,
**dadurch gekennzeichnet, dass** der Auslassabschnitt des Verbindungsabschnittes aufweist:
ein erstes Element (200), das einen ersten Teil des Auslassabschnittes bildet und einen ersten Schnittabschnitt (430) aufweist, welcher vom ersten Auslassabschnitt in Richtung des Einlassabschnittes lang ausgebildet ist, um einen Innenraum des Verbindungsrohres mit einem Außenraum des Verbindungsrohres zu verbinden, und
ein zweites Element (210), das einen zweiten Teil des Auslassabschnittes bildet und einen entsprechenden zweiten Schnittabschnitt (432) aufweist, der zum ersten Schnittabschnitt des ersten Elementes korrespondiert, wobei sich das erste Element und das zweite Element verbinden, um einen Auslassabschnitt einer geschlossenen Kurvenlinien-Form zu bilden.

9. Das Abgassystem nach Anspruch 8, wobei der erste (430) und der entsprechende zweite Schnittabschnitt (432) von einem Punkt, an dem das erste Element (200) an das zweite Element (210) angefügt ist, in Richtung des Einlassabschnittes ausgebildet sind.

## Revendications

1. Système d'échappement, comprenant :
un turbocompresseur (100) actionné par les gaz d'échappement ;
un pot catalytique (130) disposé au niveau du côté aval du turbocompresseur ; et
un tuyau de connexion (140) qui présente une partie entrée (400) et une partie sortie (440) formées au niveau des deux parties extrémités du tuyau de connexion, destiné à transférer les gaz d'échappement du turbocompresseur vers le pot catalytique ;
**caractérisé en ce que** le tuyau de connexion comprend :
un premier élément (200) sur lequel est formée la partie entrée au niveau d'une partie extrémité du premier élément, et sur lequel est formée une première partie sortie (410) au niveau de l'autre partie extrémité du premier élément, de façon à former une partie de la partie sortie; et
un second élément (210) joint au premier élément de façon à former toute la partie sortie avec la première partie sortie.

2. Système d'échappement selon la revendication 1, dans lequel la première partie sortie (410) du premier élément (200) et la seconde partie sortie (420) du second élément (210), sont jointes de façon à former une partie sortie (440) qui présente une forme de ligne courbe fermée.

3. Système d'échappement selon la revendication 2, dans lequel la partie entrée (400) du premier élément (200) présente une forme de cercle, et la première partie sortie (410) du premier élément et la seconde partie sortie (420) du second élément (210) présentent une forme de demi-cercle qui correspondent l'une à l'autre de façon à former une partie sortie circulaire (440).

4. Système d'échappement selon la revendication 1, dans lequel est formée sur le second élément (210) une ouverture de détecteur (220) destinée à connecter l'intérieur du tuyau de connexion (140) à l'extérieur du tuyau de connexion.

5. Système d'échappement selon la revendication 1, comprenant en outre :
une bride (142) jointe à la partie entrée (400) du premier élément (200) et qui est connectée à la sortie du turbocompresseur (100), soudée au premier élément le long d'une circonférence extérieure du premier élément de façon à former une partie soudure de la surface extérieure (230).

6. Système d'échappement selon la revendication 5, dans lequel la bride (142) et la partie sortie du turbocompresseur sont réalisées dans un acier de moulage.

7. Système d'échappement selon la revendication 5, dans lequel le premier élément (200) et le second élément (210) sont réalisés en pressant un matériau et sont joints de façon à former le tuyau de connexion (140).

8. Système d'échappement, comprenant :
un turbocompresseur (100) actionné par les gaz d'échappement ;
un pot catalytique (130) disposé au niveau du côté aval du turbocompresseur ; et
un tuyau de connexion (140) sur lequel sont formées une partie entrée (400) et une partie sortie (440) au niveau des deux parties extrémités du tuyau de connexion de façon à transférer les gaz d'échappement du turbocompresseur vers le pot catalytique, dans lequel la partie entrée présente une forme de courbe fermée destinée à recevoir les gaz d'échappement en provenance du turbocompresseur ;
**caractérisé en ce que** la partie sortie de la partie connexion comprend :
un premier élément (200) qui forme une première partie de la partie sortie et qui comprend une première partie incision (430) formée le long de la première partie sortie vers la partie entrée de façon à connecter l'intérieur du tuyau de connexion à l'extérieur du tuyau de connexion ; et
un second élément (210) qui forme une seconde partie de la partie sortie et qui comprend une seconde partie incision correspondante (432) qui correspond à la première partie incision du premier élément, dans lequel se joignent le premier élément et le second élément de façon à former une partie sortie d'une forme de ligne courbe fermée.

9. Système d'échappement selon la revendication 8, dans lequel la première partie incision (430) et la seconde partie incision correspondante (432), sont formées à partir d'un point où le premier élément (200) est joint au second élément (210) vers la partie entrée.
